# EUROPEAN PATENT APPLICATION

(11) **EP 0 762 673 A2**
(43) Date of publication of application: **12.03.1997**
(21) Application number: 96306168.4
(22) Date of filing: 23.08.1996
(51) Int. Cl.: H04B 10/10

(54) **A point-type radio controller**

(30) Priority: 25.08.1995 KR 2665995; 31.10.1995 KR 3875795; 31.10.1995 KR 3875695
(71) Applicant: LG ELECTRONICS INC., Seoul (KR)
(72) Inventor: Yeol, Kim Jeong, Suwon-si, Kyungki-do (KR); Chin, Chwa Duk, Ilwon-dong, Kangnam-ku, Seoul (KR)
(74) Representative: Cross, Rupert Edward Blount

(57) **Abstract**

A point-type radio controller eliminates a time interval between infrared signals transmitted from a plurality of transmitting diodes, and eliminates influences caused by a noise and an external interference. The point-type radio controller employs a frequency division transmitting method using a different carrier frequency. Otherwise, the present invention attaches horizontal and vertical polarization filters to the transmitting diodes, arranges a pair of polarization filters being the horizontal and vertical polarization filters at a constant distance in the receiving sensor, and transmits the infrared rays wherein horizontal and vertical polarization components are separated while transmitting. Otherwise, the present invention includes the infrared transmitting diodes having a different characteristic wavelength; includes a pair of the receiving sensors capable of receiving the infrared signals transmitted with having a different characteristic wavelength; basically separates the plurality of infrared signals from a plurality of transmitting diodes; and transmits the infrared signals. Accordingly, the infrared signals are simultaneously transmitted to outside without a time interval. As a result, the present invention prevents or minimizes a signal distortion and a mutual interference between the infrared rays in transmitting/receiving the infrared rays, accurately calculates coordinates-position indicated by the user, and thus accurately controls a pointing operation. Furthermore, since there are no influences caused by a noise and an external interference, a transmission error ratio decreases and a transmission ratio enhances.

## Description

### BACKGROUND OF THE INVENTION

### Field of the Invention

The present invention relates to a point-type radio controller. More particularly, it relates to a point-type radio controller which eliminates a time interval between infrared signals transmitted from a plurality of transmitting diodes, thereby eliminating influences caused by a noise and an external interference.

### Discussion of Related Art

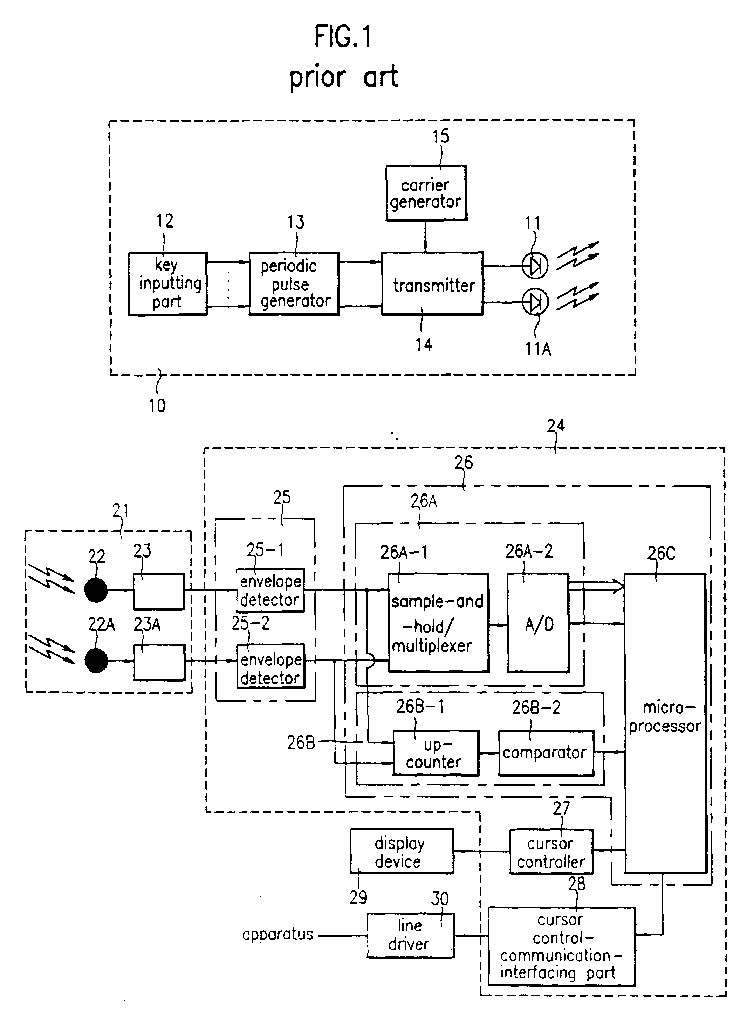

As shown in Fig. 1, a conventional method for embodying a point-type radio controller is a time-sharing transmitting method for transmitting infrared rays having a common frequency with having a time lag therebetween, and has been described in Korean Patent Application No. 95-7968, entitled 'A POINT-TYPE RADIO CONTROLLER USING INFRARED RAYS'.

Referring to Fig. 1, when various key signals (e.g, a cursor control signal, a selection command, and an operation command) are applied to a periodic pulse generator 13 through a key inputting part 12 of a transmitting means 30, the periodic pulse generator 13 generates a periodic pulse of a code identifying waveform according to an key signal, further generates a periodic pulse of a synchronization identifying waveform about the key control signal, and then transmits them to a transmitter 14.

The transmitter 14 synthesizes a carrier signal from a carrier generator 15 and a period pulse signal from the periodic pulse generator 13, and converts them to an infrared-emitting signal. Accordingly, infrared emitting diodes 11 and 11A being a plurality of signal generators transmit the infrared signal outputted from the transmitter 14 into outward space.

In the meantime, infrared receiving sensors 22 and 22A of a receiving means 21 attached at a lower part of a display device 29 with having a constant distance in the direction of X-axis receive the infrared signal emitted outside, and then applies the infrared signal to amplifying/filtering parts 23 and 23A.

The amplifying/filtering parts 23 and 23A amplifies a weakened infrared signal received, filters it, and then it to a controlling means 24.

Envelope detectors 25-1 and 25-2 of a signal reproducer 25 in the controlling means 24 eliminate a carrier signal included in the signal received from the receiving means 21, detects an envelope signal, and outputs coordinates calculator 26.

The coordinates calculator 26 receives the output signals of the envelope detectors 25-1 and 25-2, convert them to digital code, and computes a coordinates-position of an indicated point currently displayed on the display device 29.

That is, infrared receiving waveforms reproduced from each of envelope detectors 25-1 and 25-2, are added in an up-counter 26B-1 of a time interpreting part 26B in the coordinates calculator 26, and are then applied to a comparator 26B-2, thereby reproducing an original digital signal.

When the reproduced signal is applied to a microprocessor 26C, the microprocessor 26C interprets a time interval, thereby identifying code.

At this time, in case of a command which does not move the cursor, a general processing is achieved about this command. In a case of a command which moves the cursor, a sample-and-hold/multiplexer 26A-1 and an analog-to-digital converter 26A-2 included in a synchronizing signal waveform detector 26A, detect synchronization identifying waveforms in each envelope signal outputted from the envelope detectors 25-1 and 25-2, and then apply the synchronization identifying waveforms to the microprocessor 26C.

Accordingly, the microprocessor 26C calculates coordinates values of X-axis and Y-axis by interpreting a relative difference among the synchronization identifying waveforms, and applies both coordinates values to the cursor controller 27.

A cursor controller 27 moves a cursor currently displayed on the display device 29 to a calculated coordinates-position of X-axis and Y-axis.

A cursor-control-communication-interfacing part 28 transmits the coordinates values of X-axis and Y-axis from the microprocessor 26C, to another equipment through a line driver 30.

However, the conventional time-sharing transmitting method should consider a time error in receiving. That is, it should consider again the time error when displaying after a receiver finish a receiving operation.

In addition, it transmits a plurality of infrared signals having carrier frequency of the same characteristics with having a time lag therebetween. That is, the conventional method transmits the infrared signals by using modulation and demodulation technologies without a basic separation of transmission waves of two infrared signals. Accordingly, a transmission error ratio is high due to a noise and a mutual interference in transmitting, a signal distortion is generated, and a transmission ratio decreases.

### SUMMARY OF THE INVENTION

Accordingly, there is a need for a point-type radio controller that substantially obviates one or more of the problems due to limitations and disadvantages of the related art.

For example, it would be advantageous to provide a point-type radio controller which transmits infrared signals having a different carrier frequency during a transmission of a coded transmitting signals, thus eliminating influences caused by a noise and - external interference, lowering a transmission error ratio, and enhancing a transmission ratio.

It would also be advantageous to provide a point-type radio controller which attaches polarization filters to the transmitting diodes, attaches polarization filter pairs to the receiving sensor, thus transmits the infrared signals basically separated by an optical analytical method, thereby preventing a mutual interference and a signal distortion in a plurality of infrared signals while transmitting or receiving the infrared signals.

It would also be advantageous to provide a point-type radio controller which includes the transmitting diodes having a different wavelength in the receiving means, includes receiving sensor pairs capable of receiving different wavelengths outputted from the transmitting means in the receiving means, basically separates a plurality of infrared signals emitted to outside, and minimizes a mutual interference and a signal distortion in transmitting.

The features and advantages of the invention will be set forth in the description which follows, and in part will be apparent from the description, or may be learned by practice of the invention. The objectives and other advantages of the invention will be realized and attached by the structure particularly pointed out in the written description and claims hereof as well as the appended drawings.

To achieve these and other advantages and in accordance a preferred embodiment of the present invention, there is provided a point-type radio controller which includes:
transmitting means which has a plurality of infrared transmitting diodes arranged to be had a directive angle in a direction of a predetermined axis, converts a signal responsive to a key input to infrared signals, and simultaneously transmits the infrared signals to outside without a time division;
receiving means which arranges a plurality of receiving sensors capable of receiving infrared signals which are simultaneously emitted by a plurality of transmitting diodes of the transmitting means without the time division with having a constant distance therebetween, and receives the plurality of receiving signals; and
a controller which calculates coordinates position of an indicated point by using a relative difference among intensities of infrared signals received into the plurality of receiving sensors of the receiving means, and corresponds the coordinates position to the point on a display screen.

A point-type radio controller according to another preferred embodiment of the present invention includes:
transmitting means which has a plurality of infrared transmitting diodes which are arranged in a direction of a predetermined axis in order to keep a constant angle therebetween, converts a corresponding signal by the key input to a plurality of infrared rays having a different carrier frequency, and then transmits the infrared rays to outside;
receiving means for receiving transmitted infrared rays, in which a plurality of infrared receiving sensors are arranged at a right angle to the infrared transmitting diodes of the transmitting means; and
a controller which calculates coordinates of an indicated point position by using a relative intensity difference among infrared signals transmitted to the receiving sensors of the receiving means, and corresponds the coordinates to the point on a display screen.

A point-type radio controller according to yet another preferred embodiment of the present invention includes:
transmitting means which attaches horizontal and vertical polarization filters to infrared transmitting diodes emitting infrared rays according to an input signal so as to have a predetermined directional angle, separates infrared rays transmitted through the infrared transmitting diodes into horizontal and vertical polarization components, and emits the infrared rays separated;
receiving means which attaches first and second polarization filter pairs wherein the horizontal and vertical polarization filters are made as one pair to the front of the receiving sensor receiving the infrared rays from the transmitting means, and receives the horizontal and vertical polarization components propagated through free space by using the horizontal and vertical polarization filters of the first and second polarization filter pairs; and
a controller which calculates an intensity difference between the infrared signals of the horizontal and vertical components, computes coordinates of X-axis and Y-axis, and indicates a position responsive to the computed coordinates.

A point-type radio controller according to still another preferred embodiment of the present invention includes:
transmitting means in which infrared transmitting diodes having a different intrinsic wavelength are arranged to be had a direction angle in a direction of a predetermined-axis, for propagating infrared rays having a different intrinsic wavelength in emitting infrared rays according to key input into the free-space;
receiving means for receiving the infrared rays which have a different intrinsic wavelength outputted from a plurality of transmitting diodes of the transmitting means, in which first and second receiving sensor pairs respectively having a plurality of receiving sensors receiving the infrared rays from the transmitting diode as one pair are arranged at a constant distance theebetween.
a controller which calculates an intensity difference between the infrared signals applied to a plurality of receiving sensors of the first and second receiving sensor pairs of the receiving means, computes coordinates of X-axis and Y-axis, and indicates a position responsive to a computed coordinates to a receiver.

It is to be understood that both the foregoing general description and the following detailed description are exemplary and explanatory and are intended to provide further explanation of the invention as claimed.

### Brief Description of the attached Drawings

The accompanying drawings, which are included to provide a further understanding of the invention and are incorporated in and constitute a part of this specification, illustrate embodiments of the invention and together with the description serve to explain the principles of the drawings:

In the drawings:
Fig. 1 is a block diagram of a conventional point-type radio controller using infrared rays;
Fig. 2 is a block diagram of the transmitting means of the point-type radio controller using a frequency division in accordance with a first preferred embodiment of the present invention;
Fig. 3 is a block diagram of the receiving means of the point-type radio controller using a frequency division in accordance with the first preferred embodiment of the present invention;
Figs. 4A to 4G show operation waveforms of each part of the point-type radio controller using a frequency division in accordance with the first preferred embodiment of the present invention;
Fig. 5 is a block diagram of the transmitting means of the point-type radio controller using a polarization filter in accordance with a second preferred embodiment of the present invention;
Fig. 6 is a perspective view illustrating an example of a polarization filter mounted to the transmitting means of the point-type radio controller in accordance with the second preferred embodiment of the present invention;
Figs. 7A to 7C are sectional views illustrating an arrangement between a transmitting diode and a polarization filter in the infrared transmitter shown in Fig. 6;
Fig. 8 shows waveforms of infrared rays passing through the polarization filter of the point-type radio controller in accordance with the second preferred embodiment of the present invention;
Fig. 9 is a perspective view illustrating an arrangement of polarization filter pairs in the point-type radio controller in accordance with the second preferred embodiment of the present invention;
Fig. 10 is a detailed block diagram of the receiving means of the point-type radio controller using a polarization filter in accordance with the second preferred embodiment of the present invention;
Figs. 11A and 11B are plan and side views illustrating an arrangement between infrared transmitting diodes of the point-type radio controller using wavelength in accordance with a third preferred embodiment of the present invention;
Fig. 12 is a detailed block diagram of the transmitting means of the point-type radio controller using wavelength in accordance with the third preferred embodiment of the present invention;
Fig. 13 is a perspective view illustrating an arrangement between receiving sensor pairs of the point-type radio controller using wavelength in accordance with the third preferred embodiment of the present invention; and
Fig. 14 is a detailed block diagram of the receiving means of the point-type radio controller using wavelength in accordance with the third preferred embodiment of the present invention.

### Detailed Description of the Invention

Reference will now be made in detail to the preferred embodiments of the present invention, examples of which are illustrated in the accompanying drawings.

### (1) First preferred embodiment: a point-type radio controller using a frequency division

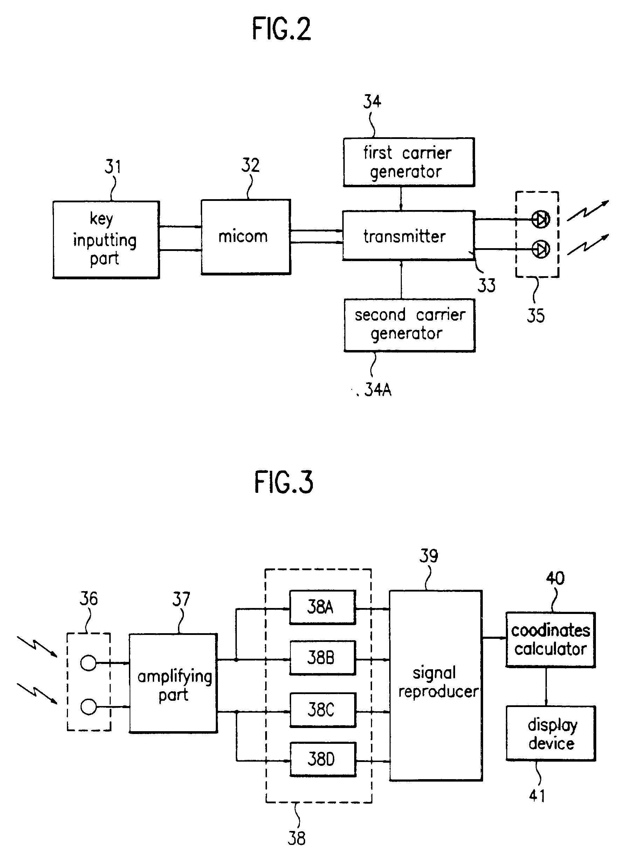

As shown in Fig. 2, the transmitting means of the point-type radio controller using a frequency division according to a first preferred embodiment of the present invention includes:
a key inputting part 31 for inputting key signals (e.g., a cursor control signal, a selection command, and an operation command);
a microcomputer 32 for generating periodic pulses of both a code identifying waveform and a synchronization identifying waveform, and controlling the entire system;
a transmitter 33 for converting the periodic pulse signal outputted from the microcomputer 32 to an infrared signal, and outputting the infrared signal;
a plurality of carrier generators 34 and 34A for applying a different carrier signal to the transmitter 33; and
a plurality of transmitting diodes 35 for transmitting the infrared signals outputted from the transmitter 33 to outside.

Referring to Fig. 3, the receiving means of the point-type radio controller using a frequency division according to the first preferred embodiment of the present invention includes:
infrared receiving sensors 36 for receiving the infrared signals outputted from the transmitting diodes 35 as an input;
an amplifying part 37 for amplifying the infrared signals received;
a filtering part 38 for separating the infrared signals into a signal having two frequency components according to a carrier frequency of each infrared signal amplified by the amplifying part 37;
a signal reproducer 39 which reproduces an original infrared signal by detecting an envelope signal in an output signal of the filtering part 38;
coordinates calculator 40 which performs an analog-to-digital conversion about an output signal of the signal reproducer 39, judges a magnitude of each receiving signals, and thus computes a coordinates-position of an indicated point; and
a display device 41 for displaying coordinates value calculated by the coordinates calculator 40.

In the first preferred embodiment of the present invention, when various key signals are applied to the microcomputer 32 through the key inputting part 31, the microcomputer 32 generates a periodic pulse of a code identifying waveform according to a key signal, further generates a periodic pulse of a synchronization identifying waveform about the cursor control signal, and then outputs them to the transmitter 33.

The transmitter 33 synthesizes a different carrier signal and a periodic pulse signal which are generated from carrier generators 34 and 34A, and converts them to an infrared signal.

Then, the infrared signal is emitted to outside through a plurality of transmitting diodes 35.

At this time, since the infrared signals emitted by the transmitting diodes 35 have a different frequency, the infrared signals are simultaneously emitted.

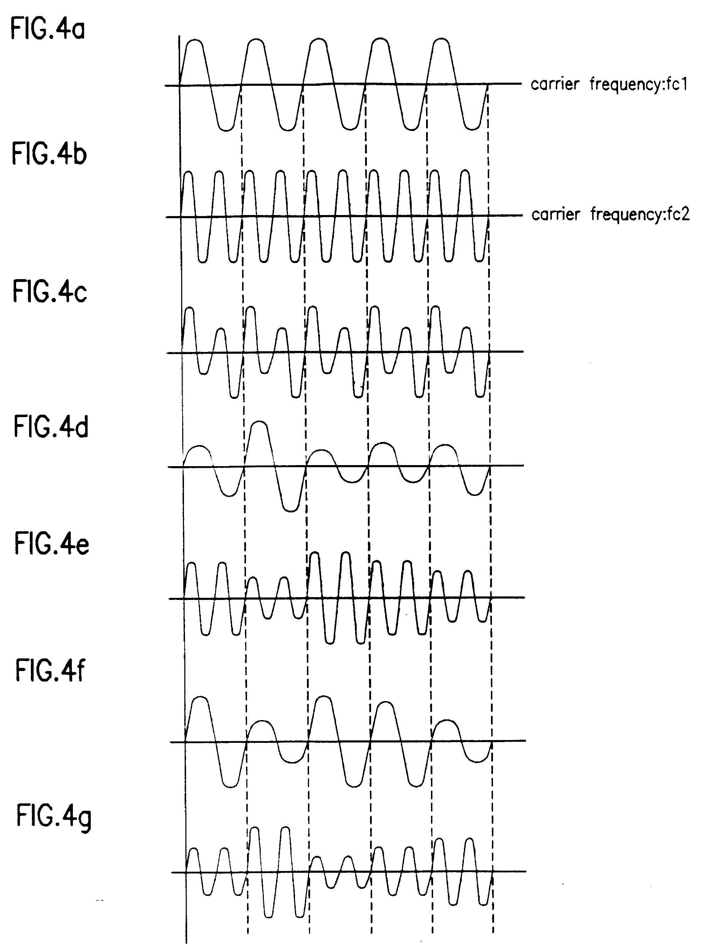

The distributions of the infrared signals emitted by the frequency division transmitting method are described in Figs. 4A and 4B.

Meanwhile, after the receiving sensors 36 receive the infrared signals having a different carrier signal transmitted from the plurality of transmitting diodes 35, the infrared signals are amplified by the amplifying part 37 and is applied to the filtering part 38.

The filtering part 38 separates the infrared signals amplified according to a different carrier frequency into two frequency components, e.g., a high frequency and a low frequency.

At this time, the first and third filters 38A and 38C of the filtering part 38 separate a low frequency component from the carrier frequency, and the second and fourth filters 38B and 38D separate a high frequency component from the carrier frequency.

In addition, when the above separated signals are inputted to the signal reproducer 39, the envelope detector (not shown) of the signal reproducer 39 eliminates the carrier signal included in the receiving signal, and detects the envelope signal, thereby reproducing an infrared receiving waveform.

The coordinates calculator 40 receives the output signals of the envelope detector as an input, converts them to digital code, and computes a coordinates-position of a current indicated point.

That is, infrared receiving waveforms reproduced by each envelope detector are mutually added in an up-counter included in a time interpreting part (not shown) of the coordinates calculator 40, are applied to a comparator (not shown), and judges the magnitude of the receiving signal, thereby computing a corresponding coordinates-position. Then, the display device 41 displays the computed coordinates-position.

Figs. 4A to 4G show operation waveforms of each part of the point-type radio controller using a frequency division in accordance with the first preferred embodiment of the present invention. Herein, Figs. 4A and 4B show that different carrier frequencies fcl and fc2 are applied to the transmitter 33.

When the different carrier frequencies fc1 and fc2 are transmitted through a transmitting diode 35, the two signals are mutually synthesized, so that waveforms shown in Fig. 4C are achieved.

When synthetic signals shown in Fig. 4C are received in the receiving sensor 36, the synthetic signals have a corresponding magnitude according to a directional angle of a hand cell (i.e., a transmitting diode).

That is, two transmitting diodes 35 are arranged at a constant angle in a direction of Y-axis (or X-axis), and thus maintain the constant angle therebetween. The two receiving sensors 36 are arranged in a direction of X-axis (or Y-axis) perpencidular to-a direction of Y-axis of the transmitting diodes 35.

Accordingly, a low frequency component of a signal applied to one receiving sensor is only filtered by a first filter 38A of the filtering part of Fig. 3. A high frequency component of the signal applied to one receiving sensor is only filtered by a second filter 38B.

In addition, a low frequency component of a signal applied to other receiving sensor is only filtered by a third filter 38C. A high frequency component of the signal applied to other receiving sensor is only filtered by a fourth filter 38D.

As s result, waveforms shown in Figs. 4D to 4G are achieved.

At this time, Figs. 4D and 4E among Figs. 4D to 4G show that waveforms applied to one receiving sensor between two receiving sensors 36 mounted in the X-axis are separated into a low frequency component and a high frequency component through each filter. Fig. 4F and 4G show that waveforms applied to other receiving sensor are separated into low frequency component and high frequency component through each filter.

An amplitude of waveforms of Fig. 4D is inversely proportional to that of Fig. 4F. And the amplitudes of Fig. 4E are also inversely proportional to that of Fig. 4G.

As described above, a point-type radio controller according to the first preferred embodiment of the present invention, employs a frequency division transmitting method using a different carrier frequency, and thus simultaneously transmits the infrared signals without a time interval. Therefore, there are no influences caused by a noise and an external interference. As a result, a transmission error ratio decreases, and a transmission ratio enhances.

### (2) Second preferred embodiment: a point-type radio controller using a polarization filter

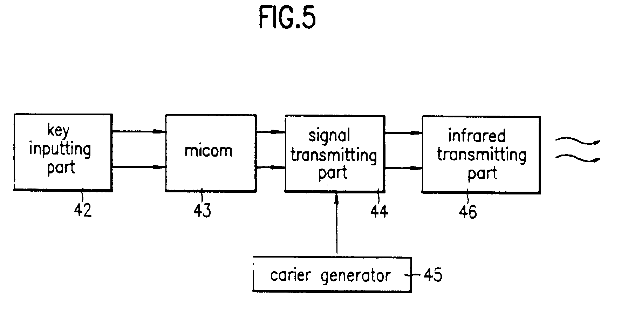

As shown in Fig. 5, the transmitting means of the point-type radio controller using a polarization filter according to a second preferred embodiment of the present invention includes:
a key inputting part 42 for inputting key signals (e.g., a cursor control signal, a selection command, and an operation command);
a microcomputer 43 for receiving the key signals of the key inputting part 42 as an input, and generating periodic pulses of both a code identifying waveform and a synchronization identifying waveform;
a signal transmitting part 44 for converting the periodic pulse signals of the microcomputer 43 to infrared signals, and outputting the infrared signal;
a carrier generator 45 for applying a carrier signal to the signal transmitting part 44; and
infrared transmitting part 46 which basically separates the infrared signals outputted from the signal transmitting part 44, and transmits the infrared signals to outside.

At this time, the infrared transmitting part 46 includes:
infrared transmitting diode for emitting the infrared signals; and
horizontal and vertical polarization filters attached to the infrared transmitting diodes, for separating the infrared signals outputted from the infrared transmitting diodes into horizontal and vertical polarization components, and transmitting the infrared signals to outside.

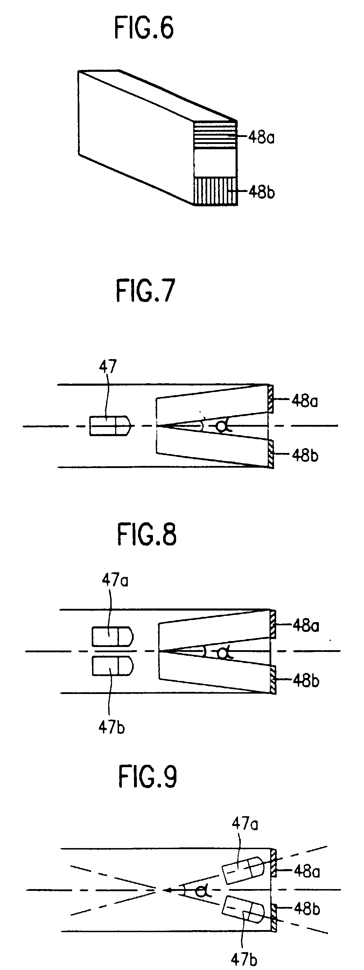

That is, as shown in Fig. 6 in the polarization filter, the horizontal and vertical polarization components are separated by using polarization filters (48a, 48b) arranged in opposite to each other.

At this time, the infrared transmitting part 46 might have three structures as shown in Figs. 7A to 7C.

That is, as shown in Fig. 7A, horizontal and vertical polarization filters (48a, 48b) are arranged to be had a constant directional angle α in one transmitting diode 47, and the infrared rays from the transmitting diodes 47 are separated into horizontal and vertical polarization components through polarization filters (48a, 48b).

In addition, Fig. 7B includes two transmitting diodes (47a, 47b) arranged in a row, and horizontal and vertical polarization filters (48a, 48b). Fig. 7C includes two transmitting diodes (47a, 47b) arranged to be achieved a constant angle α in a direction of Y-axis, and horizontal and vertical polarization filters (48a, 48b). As shown in Figs. 7B and 7C, the infrared rays outputted from the transmitting diodes (47a, 47b) are separated into horizontal and vertical polarization components through each polarization filters (48a, 48b).

The angle α shown in Figs. 7A to 7C is a directional angle capable of fixing a predetermined coordinates axis (X or Y-axis) when the receiving part receives polarization components through each polarization filters 48a and 48b.

At this time, the infrared rays are separated into a normal TEM wave in case of an optical analysis. The TEN wave is expressed as the sum of an electric field component and a magnetic field component.

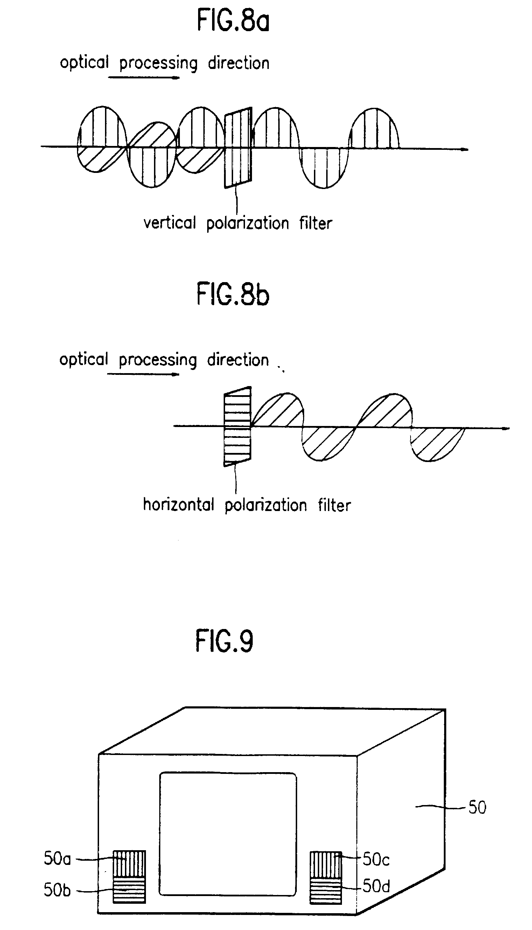

As shown in Figs. 8A and 8B, waves before passing a polarization filter are the TEN wave. As shown in Fig. 8A, after passing the vertical polarization filter, there are only vertical polarization components in the infrared rays. As shown in Fig. 8B, after passing the horizontal polarization filter, there are only horizontal polarization components in the infrared rays. Each vertical and horizontal polarization components of the infrared rays separated by the above methods is propagated, and are then inputted to the receiving part.

At this time, during a propagation time of each polarization component propagating space, a mutual interference does not occur.

On the other hand, as shown in Fig. 9, the receiver 50 receiving the horizontal and vertical polarization components includes a first polarization filter pair (50a, 50b) and a second polarization filter pair (50c, 50d). The first and second polarization filter pairs (50a, 50b) and (50c, 50d) are arranged at a constant distance in a direction of X-axis in a lower part (or upper part) of the receiver 50. Each pair is made of a horizontal polarization filter and a vertical polarization filter.

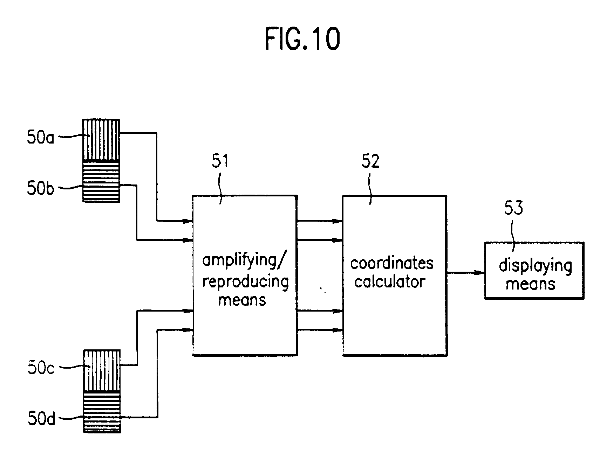

Fig. 10 is a detailed block diagram of the receiving means of the point-type radio controller using a polarization filter in accordance with the second preferred embodiment of the present invention.

As shown in Fig. 10, the receiving means of the point-type radio controller using a polarization filter includes:
a first polarization filter pair (50a, 50b) and a second polarization filter pair (50c, 50d), for receiving each polarization component emitted through the transmitting means to outside;
amplifying/reproducing means 51 which amplifies/filters vertical and horizontal polarization components received through the first and second polarization filter pairs (50a, 50b) and (50c, 50d), detects an envelope signal, and reproduces them as an original infrared receiving wave;
coordinates calculator 52 which converts each signal outputted from the amplifying/reproducing means 51 to digital code, and computes coordinates-position of an indicated point; and
a displaying means 53 for moving a cursor currently displayed on a display device, to X and Y axes's coordinatespositions calculated by the coordinates calculator 52.

In the second preferred embodiment of the present invention, when various key signals (e.g., a cursor control signal, a selection command, and an operation command) are applied to the microcomputer 43 through the key inputting part 42, the microcomputer 43 generates a periodic pulse of a code identifying waveform according to a key signal, further generates a periodic pulse of a synchronization identifying waveform about the cursor control signal, and then outputs them to the signal transmitting part 44.

The signal transmitting part 44 superposes a carrier signal from the carrier generator 45 and a periodic pulse signal from the microcomputer 43, and outputs them to the infrared transmitting part 46. When the infrared rays are transmitted through the transmitting diodes (see Figs. 7A to 7C) of the infrared transmitting part 46, the infrared rays are intended to have a predetermined directional angle α, are then separated into the horizontal and vertical polarization component through the horizontal and vertical polarization filters (48a, 48b), and are transmitted to outside.

At this time, the directional angle is adjusted to fix a predetermined coordinates axis (X or Y-axis).

Meanwhile, to fix the coordinates axis opposite to the coordinates axis fixed by the transmitting means, there is a constant distance between the first polarization filter pair (50a, 50b) and the second polarization filter pair (50c, 50d).

At this time, the vertical polarization filters (50a, 50c) in the first and second polarization filter pairs (50a, 50b) and (50c,50d) performs a filtering function in order to receive only vertical polarization filter component propagated through the free space. The horizontal polarization filters (50b, 50d) performs a filtering function in order to receive only horizontal polarization filter component.

Furthermore, the amplifying/reproducing means 51 amplifies/filters the infrared signals of each vertical and horizontal polarization components received through the first and second polarization filter pairs (50a, 50b) and (50c, 50d), detects an envelope signal, reproduces them as an original infrared receiving wave, and outputs the original infrared receiving wave to the coordinates calculators 52.

The coordinates calculator 52 calculates a coordinates value of Y-axis by calculating an intensity difference between the infrared signals having vertical and horizontal polarization components received through the first polarization filter pair (50a, 50b), calculates another coordinates value of Y-axis by calculating an intensity difference between the infrared signals having vertical and horizontal polarization components received through the second polarization filter pair (50c, 50d), averages two coordinates values of Y-axis, and computes a final coordinates value of Y-axis.

In addition, the coordinates calculator 52 calculates a coordinates value of X-axis by calculating an intensity difference between the infrared signals of vertical components received through vertical polarization filters (50a, 50c), calculates another coordinates value of X-axis by calculating an intensity difference between the infrared signals of horizontal polarization components received through the horizontal polarization filters (50b, 50d) of the first and second polarization filter pairs, averages two coordinates values of X-axis, and computes a final coordinates value of X-axis.

The displaying means 53 moves a cursor to the final coordinates values of X and Y axes through the above double calculation, and then displays the coordinates value.

As described above, a point-type radio controller according to the second preferred embodiment of the present invention, attaches horizontal and vertical polarization filters to the transmitting diodes, arranges a polarization filter pair being the horizontal and vertical polarization filters at a constant distance in the receiving sensor, transmits the infrared rays of which horizontal and vertical polarization components are separated from each other while transmitting, prevents a signal distortion and a mutual interference between the infrared rays in transmitting/receiving, and thus accurately controls a pointing operation of the user.

### (3) Third preferred embodiment: a point-type radio controller using wavelength

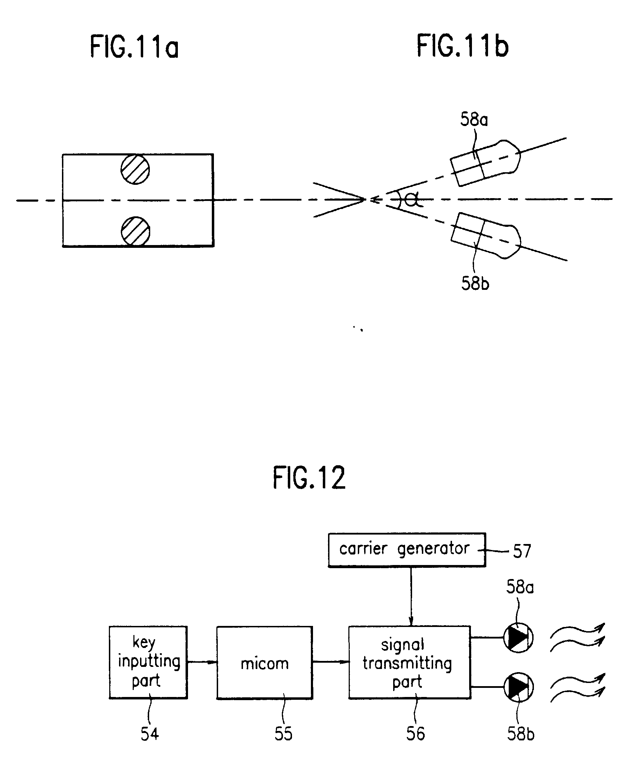

Figs. 11A and 11B are plan and side views illustrating an arrangement state between infrared transmitting diodes of the point-type radio controller using wavelength in accordance with a third preferred embodiment of the present invention.

As shown in Figs. 11A and 11B, the infrared transmitting diodes (58a, 58b) are arranged at a constant angle α in a direction of Y-axis in the transmitting means, and a directional axis of- the transmitting means is perpendicular to that of the receiving means.

At this time, characteristics of a first transmitting diode 58a are different from those of a second transmitting diode 58b. Since a propagation intrinsic wavelength λ of the diode 58a is different from that of the diode 58b, there is no mutual interference while propagating free space.

The directional angle α fixes a predetermined coordinates axis (X or Y-axis) by an arrangement of the transmitting diodes.

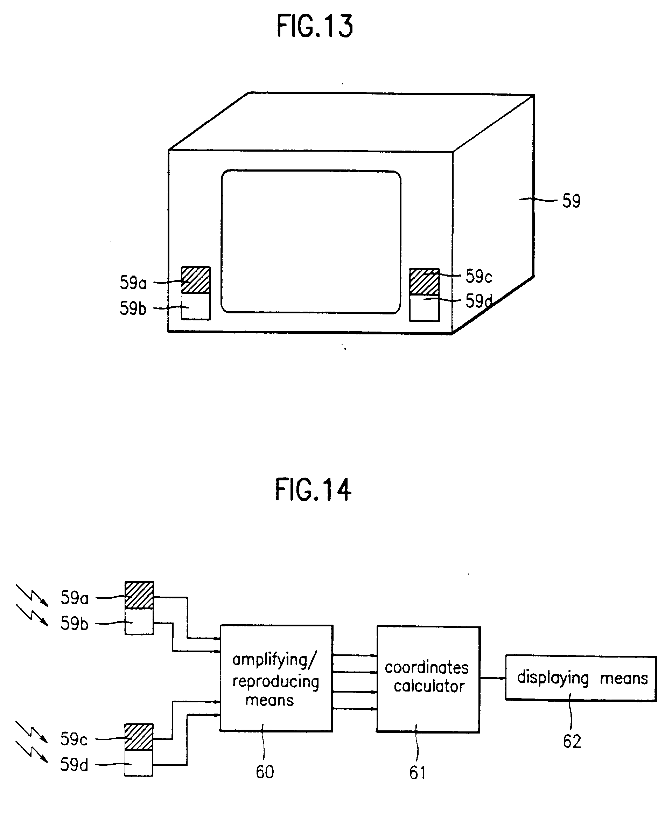

If the first diode 58a and the second diode 58b achieve an orthogonal arrangement, it is intended to calculate an axis of coordinates of Y-axis. In this case, the receiving sensors of the receiving means should achieve a horizontal arrangement as shown in Fig. 13, thereby calculating an axis of coordinates of X-axis.

Fig. 12 is a detailed block diagram of the transmitting means of the point-type radio controller using wavelength in accordance with the third preferred embodiment of the present invention.

The transmitting means of the point-type radio controller using wavelength according to a third preferred embodiment of the present invention includes:
a key inputting part 54 for inputting key signals (e.g., a cursor control signal, a selection command, and an operation command);
a microcomputer 55 for receiving the key signals of the key inputting part 54 as an input, and generating periodic pulses of both a code identifying waveform and a synchronization identifying waveform;
a signal transmitting part 56 for converting the periodic pulse signals of the microcomputer 55 to infrared signals, and outputting the infrared signal;
a carrier generator 57 which applies a carrier signal to the signal transmitting part 56 by oscillating a specific signal; and
first and second infrared transmitting diodes (58a, 58b) which basically separate infrared signals outputted from the signal transmitting part 56, and transmit the infrared signals to outside.

At this time, since characteristics of the first and second infrared transmitting diodes (58a, 58b) are different from each other, signals are propagated to a receiving part without a mutual interference in propagating the free space.

Fig. 13 is a perspective view illustrating an arrangement between receiving sensor pairs of the receiving means in the point-type radio controller using wavelength in accordance with the third preferred embodiment of the present invention. In Fig. 13, two receiving sensor pairs (59a, 59b) and (59c, 59d) are attached at a constant distance in the direction of X-axis in a lower (or upper) part of a display device 59.

At this time, each receiving sensor pair includes two receiving sensors which respectively receive the infrared rays emitted from the first and second transmitting diodes (58a, 58b). The first receiving sensors (59a, 59c) of the receiving sensor pairs should be designed to be matched with characteristics of the first transmitting diode 58a. The second receiving sensors (59b, 59d) of the receiving sensor pairs should be designed to be matched with characteristics of the first transmitting diode 58b. The infrared rays from the first transmitting diode 58a are applied to the first receiving sensors (59a, 59c) in the first and second receiving sensor pairs. The infrared rays from the first transmitting diode 58b are applied to the second receiving sensors (59b, 59d) in the first and second receiving sensor pairs.

Herein, since the characteristics of the first receiving sensors (59a, 59c) are not matched with those of the output infrared rays of the second transmitting diode 58b, the sensors (59a, 59c) cannot receive the infrared signal. In addition, since the characteristics of the second receiving sensors (59b, 59d) are not matched with those of the output infrared rays of the first transmitting diode 58a, the sensors (59b, 59d) cannot receive the infrared signal.

On the other side, the first receiving sensors (59a, 59c) of the receiving sensor pairs might be designed to be matched with characteristics of the second transmitting diode 58b, and the second receiving sensors (59b, 59d) might be designed to be matched with characteristics of the first transmitting diode 58a.

As shown in Fig. 14, the receiving means of the point-type radio controller using wavelength includes:
first and second receiving sensor pairs (59a, 59b) and (59c, 59d) for receiving the infrared signals emitted through first and second transmitting diodes (58a, 58b) having a different characteristic in the transmitting means;
amplifying/reproducing means 60 which amplifies/filters each infrared signals received through the first and second receiving sensor pairs (59a, 59b) and (59c, 59d), detects envelope signals, and then reproduces them as original infrared receiving waveforms;
coordinates calculator 61 which converts an output signal of the amplifying/reproducing means 60 to digital code, and computes coordinates-position of an indicated point; and
displaying means 62 for moving a cursor currently displayed on a display device, to X and Y axes's coordinates-positions calculated by the coordinates calculator 61.

In the third preferred embodiment of the present invention, when various key signals (e.g., a cursor control signal, a selection command, and an operation command) are applied to the microcomputer 55 through the key inputting part 54, the microcomputer 55 generates a periodic pulse of a code identifying waveform according to a key signal, further generates a periodic pulse of a synchronization identifying waveform about the cursor control signal, and then outputs them to the signal transmitting part 56.

The signal transmitting part 56 superposes a carrier signal from the carrier generator 57 and a periodic pulse signal from the microcomputer 55, and outputs them to first and second transmitting diodes (58a, 58b) having a different propagation intrinsic wavelength λ.

At this time, the infrared rays emitted through the first and second transmitting diodes (58a, 58b) have a different propagation intrinsic wavelength. The infrared rays are intended to have a predetermined directional angle α, and are transmitted to outside. Herein, the directional angle α is adjusted to be determined a predetermined coordinates axis (X or Y-axis).

The infrared rays from the first transmitting diode 58a are applied to the first receiving sensors (59a, 59c) of first and second receiving sensor pairs. The infrared rays from the second transmitting diode 58b are applied to the second receiving sensors (59c, 59d) in first and second receiving sensors pairs.

At this time, to fix the coordinates axis opposite to the coordinates axis fixed by the transmitting means, there is a constant distance between the first and second receiving sensor pairs (59a, 59b) and (59c, 59d).

Accordingly, the infrared signals received through the first and second receiving sensor pairs (59a, 59c) and (59b, 59d) are amplified/filtered through amplifying/reproducing means 60, are reproduced as original infrared receiving waveforms by detecting an envelope signal, and are outputted to the coordinates calculator 61.

The coordinates calculator 61 calculates a coordinates value of X-axis by calculating an intensity difference between two infrared signals received through the first receiving sensor pair (59a, 59c) of the first and second receiving sensor pairs, calculates another coordinates value of X-axis by calculating an intensity difference between two infrared signals received through the second receiving sensor pair (59b, 59d), averages two coordinates values of X-axis, and computes a final coordinates value of X-axis.

In addition, the coordinates calculator 61 calculates a coordinates value of Y-axis by calculating an intensity difference between two infrared signals received through first and second receiving sensors (59a, 59b) of the first receiving sensor pair, calculates another coordinates value of Y-axis by calculating an intensity difference between two infrared signals received through first and second receiving sensors (59c, 59d) of the second receiving sensor pair, averages two coordinates values of Y-axis, and computes a final coordinates value of Y-axis.

The displaying means 62 moves a cursor to the final coordinates values of X and Y axes through the above double calculation, and display it.

As described above, a point-type radio controller according to the third preferred embodiment of the present invention; employs the infrared transmitting diodes having a different characteristic wavelength into the receiving means; includes the receiving sensor pairs capable of receiving the infrared signals outputted from the transmitting means into the receiving means, the infrared signals have a different wavelength; basically separates the plurality of infrared signals emitted from a plurality of transmitting diodes; and transmits the infrared signals. As a result, the point-type radio controller according to the third preferred embodiment minimizes a mutual interference and a signal distortion in transmitting, thereby accurately calculating the indicated coordinates.

As described above, in one embodiment the present invention employs a frequency division transmitting method using a different carrier frequency. In another embodiment the present invention attaches horizontal and vertical polarization filters to the transmitting diodes, arranges a pair of polarization filters being the horizontal and vertical polarization filters at a constant distance to the receiving sensor, and transmits the infrared rays wherein horizontal and vertical polarization components are separated While transmitting. In still another embodiment the present invention includes the infrared transmitting diodes having a different characteristic wavelength; includes the receiving sensor pairs capable of receiving the infrared signals transmitted with having a different characteristic wavelength; basically separates the plurality of infrared signals from a plurality of transmitting diodes; and transmits the infrared signals. Accordingly, the infrared signals are simultaneously transmitted to outside without a time interval. As a result, the embodiments of the invention prevents or minimizes a signal distortion and a mutual interference between the infrared rays in transmitting/receiving the infrared rays, accurately calculates coordinates-position indicated by the user, and thus accurately controls a pointing operation. Furthermore, since there are no influences caused by a noise and an external interference, a transmission error ratio decreases and a transmission ratio enhances.

It will be apparent to those skilled in the art that various modifications and variations can be made in the method for manufacturing a liquid crystal display unit of the present invention without departing from the scope of the invention. Thus, it is intended that the present invention cover the modifications and variations of this invention provided they come within the scope of the appended claims and their equivalents.

## Claims

1. A point-type radio controller, comprising:
transmitting means which has a plurality of infrared transmitting diodes arranged to be had a directive angle in a direction of a predetermined axis, converts a signal responsive to a key input to infrared signals, and simultaneously transmits the infrared signals to outside without a time division;
receiving means which arranges a plurality of receiving sensors capable of receiving infrared signals which are simultaneously emitted by a plurality of transmitting diodes of the transmitting means without the time division with having a constant distance therebetween, and receives the plurality of receiving signals; and
a controller which calculates coordinates position of an indicated point by using a relative intensity difference among infrared signals received into the plurality of receiving sensors of the receiving means, and corresponds the coordinates position to the point on a display screen.

2. The point-type radio controller as set forth in claim 1, wherein the transmitting means transmits the infrared rays having a different carrier frequency into outward space.

3. The point-type radio controller as set forth in claim 1, wherein the transmitting means attaches horizontal and vertical polarization filters to the transmitting diode, and thus transmits infrared rays separated as horizontal and vertical polarization components to outside.

4. The point-type radio controller as set forth in claim 1, wherein the transmitting means arranges the infrared transmitting diodes having a different characteristic wavelength, and transmits infrared signals having a different wavelength to outside.

5. The point-type radio controller as set forth in claim 1, wherein the receiving means attaches first and second polarization filter pairs wherein the horizontal and vertical polarization filters are made as one pair, and receives the infrared rays separated as horizontal and vertical polarization component and transmitted to outside.

6. The point-type radio controller as set forth in claim 1, wherein the receiving means arranges a pair of receiving sensors capable of receiving the infrared rays having a different wavelengths, at a constant distance.

7. A point-type radio controller, comprising:
transmitting means which has a plurality of infrared transmitting diodes which are arranged in a direction of a predetermined axis in order to keep a constant angle therebetween, converts a corresponding signal by the key input to a plurality of infrared rays having a different carrier frequency, and then transmits the infrared rays to outside;
receiving means for receiving transmitted infrared rays, in which a plurality of infrared receiving sensors are arranged at a right angle to the infrared transmitting diodes of the transmitting means; and
a controller which calculates coordinates of an indicated point position by using a relative intensity difference among infrared signals transmitted to the receiving sensors of the receiving means, and corresponds the coordinates to the point on a display screen.

8. The point-type radio controller as set forth in claim 7, wherein the transmitting means comprises:
a key inputting part for inputting key signals;
a microcomputer 32 for generating periodic pulses of both a code identifying waveforms and a synchronization identifying waveforms, and controlling an entire system;
a plurality of carrier generators for generating a different carrier frequency;
a plurality of signal transmitting parts which superpose a plurality of carrier frequencies from the carrier generator 45 and a periodic pulse signal from the microcomputer, and convert them to the infrared signals; and
a plurality of transmitting diodes for emitting the infrared signals having a different carrier frequency from the signal transmitting part, to outside.

9. The point-type radio controller as set forth in claim 7, wherein the controller comprises:
amplifying/filtering parts for amplifying the infrared signals received through a plurality of receiving sensors, and separates them as a signal of a plurality of frequency components.
a signal reproducer for reproducing an output signal of the filtering part as an original waveforms;
a coordinates calculator for calculating the coordinates-position of the indicated point by a relative intensity difference caused by output signals of the signal reproducer; and
a display device for displaying a coordinates value calculated by the coordinates calculator.

10. The point-type radio controller as set forth in claim 7, wherein the transmitting diodes of the transmitting means are arranged in a direction of Y-axis, the receiving diodes of the receiving means are arranged at a right angle to the transmitting diodes and arranged in a direction of X-axis.

11. A point-type radio controller, comprising:
transmitting means which attaches horizontal and vertical polarization filters to infrared transmitting diodes emitting infrared rays according to an input signal so as to have a predetermined directional angle, separates infrared rays transmitted through the infrared transmitting diodes into horizontal and vertical polarization components, and emits the infrared rays separated;
receiving means which attaches first and second polarization filter pairs wherein the horizontal and vertical polarization filters are made as one pair, to the front of the receiving sensor receiving the infrared rays from the transmitting means, and receives the horizontal and vertical polarization components propagated through free space by using the horizontal and vertical polarization filters of the first and second polarization filter pairs; and
a controller which calculates an intensity difference between the infrared signals of the horizontal and vertical components, computes coordinates of X-axis and Y-axis, and indicates a position responsive to the computed coordinates.

12. The point-type radio controller as set forth in claim 11, wherein the transmitting means includes the horizontal and vertical polarization filters arranged to be had a constant directional angle α in one infrared transmitting diode.

13. The point-type radio controller as set forth in claim 11, wherein the transmitting means arranges the horizontal and vertical polarization filters to a plurality of infrared transmitting diodes arranged in a row in order to have a predetermined directional angle.

14. The point-type radio controller as set forth in claim 11, wherein the transmitting means arranges the horizontal and vertical polarization filters to a plurality of infrared transmitting diodes arranged to be had a predetermined directional angle in a direction of a predetermined axis of coordinates.

15. The point-type radio controller as set forth in claims 12 and 14, wherein the directional angle of the transmitting means is capable of fixing a predetermined coordinates axis (X or Y-axis) when the receiving means receives polarization components through each of the polarization filters.

16. The point-type radio controller as set forth in claims 11 and 14, wherein the first and second polarization filters of the receiving means are arranged to be had a constant distance therebetween, so as to fix an axis of coordinates opposite to an axis of the coordinates fixed by the transmitting means.

17. The point-type radio controller as set forth in claim 11, wherein the controller: calculates coordinates of Y-axis by calculating an intensity difference between the infrared signals having vertical and horizontal polarization components received through the horizontal and vertical polarization filters of the first polarization filter pair; calculates another coordinates of Y-axis by calculating an intensity difference between the infrared signals having vertical and horizontal polarization components received through the horizontal and vertical polarization filters of the second polarization filter pair; averages values of the two coordinates of Y-axis; and computers a final coordinates value of Y-axis; calculates coordinates of X-axis by calculating an intensity difference between infrared signals of vertical components received through vertical polarization filters of the first and second polarization filter pairs; calculates another coordinates value of X-axis by calculating an intensity difference between infrared signals of horizontal polarization components received through the horizontal polarization filters of the first and second polarization filter pairs; averages values of the two coordinates of X-axis; and computes a final coordinates value of X-axis.

18. The point-type radio controller, comprising:
transmitting means in which infrared transmitting diodes having a different intrinsic wavelength are arranged to be had a direction angle in a direction of a predetermined-axis, for propagating infrared rays having a different intrinsic wavelength in emitting infrared rays according to key input into the free-space;
receiving means for receiving the infrared rays which have a different intrinsic wavelength outputted from a plurality of transmitting diodes of the transmitting means, in which first and second receiving sensor pairs respectively having a plurality of receiving sensors receiving the infrared rays from the transmitting diode as one pair are arranged at a constant distance therebetween;
a controller which calculates an intensity difference between the infrared signals applied to a plurality receiving sensors of the first and second receiving sensor pairs of the receiving means, computes coordinates of X-axis and Y-axis, and indicates a position responsive to a computed coordinates to a receiver.

19. The point-type radio controller as set forth in claim 18, wherein:
when the infrared transmitting diodes of the transmitting means are arranged to be had a constant directional angle in a direction of Y-axis, the first and second receiving sensor pairs of the receiving means are arranged at a constant angle in a direction of X-axis.

20. The point-type radio controller as set forth in claim 19, wherein:
when the infrared transmitting diodes of the transmitting means are arranged to be had a constant directional angle in a direction of X-axis, the first and second receiving sensor pairs of the receiving means are arranged at a constant angle in a direction of Y-axis.

21. The point-type radio controller as set forth in claims 19 and 20, wherein the directional angle of the transmitting means is capable of fixing a predetermined coordinates axis (X or Y-axis), when the receiving means receives infrared signals having a different characteristic through the infrared transmitting diodes.

22. The point-type radio controller as set forth in claim 18, wherein the receiving means: calculates a coordinates value of X-axis by calculating an intensity difference between infrared signals received through the first receiving sensor of first and second receiving sensor pairs; calculates another coordinates value of X-axis by calculating an intensity difference between two infrared signals received through the second receiving sensor; averages the two coordinates values of X-axis; and computes a final coordinates value of X-axis; calculates a coordinates value of Y-axis by calculating an intensity difference between two infrared signals received through first and second receiving sensors of the first receiving sensor pair; calculates another coordinates value of Y-axis by calculating an intensity difference between two infrared signals received through first and second receiving sensors of the second receiving sensor pair; averages the two coordinates values of Y-axis; and computes a final coordinates value of Y-axis.
